# EUROPÄISCHE PATENTANMELDUNG

(11) **EP 1 967 396 A1**
(43) Veröffentlichungstag der Anmeldung: **10.09.2008**
(21) Anmeldenummer: 08002926.7
(22) Anmeldetag: 18.02.2008
(51) Int. Cl.: B60H 1/00, F25B 25/00, F28D 1/04, F28D 1/053

(54) **Klimaanlage mit Kältespeicher und Verfahren zum Betreiben einer derartigen Klimaanlage**

(30) Priorität: 05.03.2007 DE 102007010969
(71) Anmelder: Behr GmbH & Co. KG, 70469 Stuttgart (DE)
(72) Erfinder: Klingler, Dietrich, 73540 Heubach (DE); Kohl, Michael, 74321 Bietigheim (DE); Schäfer, Bernd, 70176 Stuttgart (DE); Manski, Ralf, 70197 Stuttgart (DE)

(57) **Zusammenfassung**

Die Erfindung betrifft eine Klimaanlage mit einem Kältemittel-Kreislauf (2), in welchem mindestens ein Kompressor (3) und mindestens ein Wärmetauscher (1) angeordnet sind und in welchem ein Kältemittel strömt, sowie einem Kälteträgermedium-Kreislauf (11), in welchem mindestens eine Pumpe (12), mindestens ein Wärmetauscher (1) und mindestens ein Kältespeicher (13) angeordnet sind und in welchem ein Kälteträgermedium strömt, wobei ein Wärmetauscher (1) vorgesehen ist, in welchem ein Wärmetausch zwischen dem Kälteträgermedium und dem Kältemittel stattfindet, sowie ein Verfahren zum Betreiben einer derartigen Klimaanlage.

## Beschreibung

Die Erfindung betrifft eine Klimaanlage mit Kältespeicher für ein Fahrzeug, insbesondere für ein Fahrzeug mit einer mehrzonigen Klimaanlage, gemäß dem Oberbegriff des Anspruches 1, sowie ein Verfahren zum Betreiben eines derartigen Systems.

Aus der DE 102 56 665 A1 ist ein System zum Heizen und Kühlen eines Innenraums eines Fahrzeugs bekannt, mit einem ersten Klimagerät, das dazu vorgesehen ist, einen vorderen Bereich des Innenraums zu heizen oder zu kühlen, und einem zweiten Klimagerät, das dazu vorgesehen ist, einen hinteren Bereich des Innenraums zu heizen oder zu kühlen, wobei dem ersten Klimagerät ein erster mit einem Kältekreis verbindbarer Verdampfer und dem zweiten Klimagerät ein zweiter mit dem Kältekreis verbindbarer Verdampfer zugeordnet ist. Hierbei ist der zweite Verdampfer in einem Latentspeicher angeordnet, um diesen mit Kälte zu laden. Ferner ist im zweiten Klimagerät ein erster Wärmetauscher angeordnet, der dazu ausgelegt ist, über einen Wärme- beziehungsweise Kälteträgerkreislauf aus dem Latentspeicher abgeführte Kälte zur Kühlung des hinteren Bereichs des Innenraums auf einen Luftstrom zu übertragen. Beispielsweise bei Nutzfahrzeugen ermöglicht es das System die Schlafkabine sowohl während der Fahrt als auch im Stand zu kühlen. Ein derartiges System lässt noch Wünsche offen.

Ausgehend von diesem Stand der Technik ist es Aufgabe der Erfindung, eine verbesserte Klimaanlage zur Verfügung zu stellen. Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage vorgesehen, mit einem Kältemittel-Kreislauf, in welchem mindestens ein Kompressor und mindestens ein Wärmetauscher angeordnet sind und in welchem ein Kältemittel strömt, sowie einem Kälteträgermedium-Kreislauf, in welchem mindestens eine Pumpe, mindestens ein Wärmetauscher und mindestens ein Kältespeicher angeordnet sind und in welchem ein Kälteträgermedium strömt, wobei ein Wärmetauscher vorgesehen ist, in welchem ein Wärmetausch zwischen dem Kälteträgermedium und dem Kältemittel stattfindet. Eine derartige Klimaanlage weist besonders bevorzugt mindestens zwei Zonen auf, insbesondere eine im Frontbereich und eine im Fondbereich, wobei auch zusätzlich eine Unterteilung in Fahrer- und Beifahrerseite möglich ist.

Bevorzugt ist im Kälteträgermedium-Kreislauf mindestens ein Kühlkörper vorgesehen ist, welcher von Luft durchströmbar ist, zu deren Kühlung er dient. Der Kühlkörper kann einer anderen Klimazone zugeordnet sein als der Wärmetauscher des Kältemittel-Kreislaufs. Hierbei ist bevorzugt der Wärmetauscher des Kältemittel-Kreislaufs, der luftdurchströmbar ist, dem Frontbereich eines Fahrzeugs (erste Klimazone) und der Kühlkörper des Kälteträgermedium-Kreislaufs, der ebenfalls luftdurchströmbar ist, dem Fondbereich des Fahrzeugs (zweite Klimazone) zugeordnet. Alternativ kann der Kühlkörper auch zur Kühlung einer Batterie, insbesondere eines Hybridfahrzeugs, oder eines anderen, wärmeerzeugenden, elektrischen Verbrauchers dienen.

Besonders bevorzugt sind der Wärmetauscher des Kältemittel-Kreislaufs und der Wärmetauscher des Kälteträgermedium-Kreislaufs integriert als ein Wärmetauscher ausgebildet. Insbesondere bevorzugt ist der Wärmetauscher auch von Luft durchströmbar.

Das Kälteträgermedium ist vorzugsweise durch Sole gebildet, jedoch sind auch andere Kälteträgermedien möglich.

Beim in der erfindungsgemäßen Klimaanlage verwendeten Wärmetauscher handelt es sich vorzugsweise um einen Wärmetauscher mit einer Mehrzahl nebeneinanderliegend angeordneter, das Kältemittel führender Rohre und mit wenigstens einem Kälteträgerbereich, in welchem das Kälteträgermedium vorgesehen ist, wobei mindestens ein einen Wärmeübergangsbereich bildendes Element, welches Teil des Kältetr-ägerbereich ist, an einem das Kältemittel führenden Rohr an mindestens zwei Seiten anliegt, insbesondere aber das das Kältemittel führende Rohr auf mindestens drei Seiten zumindest in Teilbereichen umgibt. Dabei kann das das Kältemittel führende Rohr auch vollständig innerhalb des einen Wärmeübergangsbereich bildenden Elements angeordnet sein. Die Anordnung zumindest eines Teilbereichs des das Kältemittel führenden Rohres in einem einen Wärmeübergangsbereich bildenden Element ergibt einen sehr guten Wärmeübergang. Der Wärmetauscher kann hierbei auch mehrteilig ausgebildet sein, wobei gegebenenfalls zwischen den einzelnen vom Kältemittel durchströmten Bereichen des Wärmetauscher und/oder gegebenenfalls auch den vom Kälteträgermedium durchströmten Bereichen auch Regelorgane, bspw. ein Expansionsventil, angeordnet sein können. Das einen Wärmeübergangsbereich bildende Element kann auch einen Bereich, beispielsweise einen Verbindungsbereich oder einen oder mehrere Verbindungsstege aufweisen, in welchem sich kein Kälteträgermedium befindet, und der zwischen zwei oder mehr das Kälteträgermedium führenden Bereichen angeordnet ist. Der Bereich kann vorzugsweise flächig am das Kältemittel führenden Rohr, insbesondere von dessen schmaler Stirnfläche, anliegen, jedoch kann er auch zumindest bereichsweise beabstandet vom das Kältemittel führenden Rohr angeordnet sein.

Bei einer Anordnung des das Kältemittel führenden Rohres im einen Wärmeübergangsbereich bildenden Element kann es in das das Kälteträgermedium führende, einen Wärmeübergangsbereich bildende Element eingesteckt sein oder aber direkt hierin ausgebildet sein, wobei das Kälteträgermedium bevorzugt das Kältemittel von allen Seiten umgibt, wobei insbesondere eine Rohr-in-Rohr-Anordnung vorgesehen ist.

Ebenfalls kann das einen Wärmeübergangsbereich bildende Element durch ein Rohr mit U-förmigem Querschnitt gebildet sein, insbesondere mit mehreren Kammern, die auch kanalartig unterteilt sein können (bspw. Mehrkammerrohre). Hierbei entsprechen bevorzugt die Innenabmessungen des einen Wärmeübergangsbereich bildenden Elements den Außenabmessungen des das Kältemittel führenden Rohres im entsprechenden Bereich, so dass die Rohre flächig aneinander anliegen. Auch eine einstückige Ausgestaltung, bspw. gebildet durch ein entsprechend extrudiertes Rohr mit mindestens zwei Kanälen, ist möglich.

Das das Kältemittel führende und das das Kälteträgermedium führende Rohr ist im Falle einer Anordnung vollständig innerhalb des einen Wärmeübergangsbereich bildenden Elements bevorzugt als ein doppelwandiges Flachrohr ausgebildet, wobei sich das Kältemittel im zentralen Bereich und das Kälteträgermedium im äußeren Bereich befindet. Gemäß einer weiteren bevorzugten Ausführungsform weist das doppelwandige Flachrohr Stege auf, die das außen liegende mit dem innen liegenden Flachrohr verbinden. Dadurch, dass der Kälteträgerbereich direkten Luftkontakt hat, ergibt sich eine sehr gute Dynamik beim Wärmeübergang, so dass im Bedarfsfall die Kälteleistung schnell zur Verfügung steht.

Das das Kälteträgermedium führende Rohr braucht das das Kältemittel führende Rohr nicht vollständig umgeben. Dabei sind vorzugsweise genau drei Seiten des das Kältemittel führenden Rohres vom das Kälteträgermedium führenden Rohr umgeben. Das das Kälteträgermedium führende Rohr kann dabei mit einem U-förmigen Querschnitt ausgebildet sein und das das Kältemittel führende Rohr, wobei es sich vorzugsweise um ein Flachrohr handelt, teilweise, d.h. über einen Teil seines Umfangs, umgeben, wobei bevorzugt der größte Teil des das Kältemittel führenden Rohres im Inneren des das Kälteträgermedium führenden Rohres angeordnet ist.

Das das Kältemittel führende Rohr beziehungsweise die das Kältemittel führenden Kanäle des Rohres enden bevorzugt in einem Sammler. Dabei kann sowohl ein getrennt ausgebildeter Wärmetauscher mit Kälteträgerbereich neben einem herkömmlichen Wärmetauscher angeordnet sein, wobei auch zwei Expansionsorgane vorgesehen sein können, als auch der Kälteträgerbereich direkt in den Wärmetauscher integriert sein.

Die das Kälteträgermedium führenden Rohre beziehungsweise Kanäle enden bevorzugt in einem getrennt vom Sammler ausgebildeten Kälteträgermedium-Sammelbehälter.

Bevorzugt fluchten Flachrohrreihen des Verdampfers und die einen Wärmeübergangsbereich bildenden Elemente miteinander, so dass der Luftströmungswiderstand möglichst gering ist. Jedoch können die Flachrohrreihen auch versetzt angeordnet sein, oder die einen Wärmeübergangsbereich bildenden Elemente mit den hierin angeordneten, das Kältemittel führenden Rohren können gegenüber den anderen Flachrohren des Verdampfers verdreht angeordnet sein. Eine mehrflutige Ausgestaltung der Rohre, in welchen die einen Wärmeübergangsbereich bildenden Elemente integriert sind, d.h. mehrere Reihen mit das Kälteträgermedium führenden Rohren, ist ebenfalls möglich, wie deren Umlenkungen in der Breite und/oder Tiefe.

Der Kälteträgerbereich besteht bevorzugt aus Aluminium, insbesondere innen und/oder außen beschichtetem Aluminium (wobei unter Aluminium auch eine Aluminiumlegierung zu verstehen ist), gegebenenfalls auch Kupfer, einer Kupfer-Zink-Legierung, Kunstharz oder Kunststoff. Ein Aluminium-Behälter hat den Vorteil, dass er sich mit den übrigen Teilen des Verdampfers problemlos verlöten lässt Dabei handelt es sich bevorzugt um ein stranggepresstes Flachrohr, das eine Mehrzahl von Kanälen aufweist, wobei ein Teil der Kanäle das Kälteträgermedium und der andere Teil der Kanäle das Kältemittel enthalten. Die Ausgestaltung kann jedoch auch mehrteilig sein.

Im Kältespeicher, der gut isoliert ist, kann zudem ein Speichermedium vorgesehen. Beim im Kältespeicher vorgesehenen Speichermedium, weiches vom Kälteträgermedium gekühlt wird und bei Bedarf die Kälte wieder an das Kälteträgermedium abgibt, handelt es sich bevorzugt um ein PCM-Material (phase change material), das bevorzugt kongruent schmelzende Medien, insbesondere Decanol, Tetra-, Penta- oder Hexadecan, LiClO₃3H₂O, wässrige Salzlösungen oder organische Hydrate enthält oder hieraus gebildet ist. Im Speichermedium können auch Keimbildner vorgesehen sein, welche die Kristallbildung beschleunigen. Die Phasenumwandlungstemperatur des Speichermediums liegt vorzugsweise in einem Bereich von -5°C bis 30°C, bevorzugt von 1°C bis 20°C, insbesondere von 2°C bis 15°C, insbesondere bevorzugt von 4°C bis 12°C oder von -5°C bis 5°C. Im Inneren des Kältespeichers können Einlagen, wie Rippenbleche, vorzugsweise aus Aluminium, jedoch sind auch andere Metalle oder Kunststoffe geeignet, oder andere Turbulenzeinlagen, wie Vliese oder Gestricke, bspw. aus Kunststoff oder Metall, oder Schäume, bspw. Metallschäume oder Kunststoffschäume, vorgesehen sein. Die Einlagen dienen zur Verbesserung des Wärmetransports sowie zur Erhöhung der inneren Oberfläche um die Kristallbildung des Latentmediums zu beschleunigen. Als besonders günstiges Speichermedium kann auch Wasser vorgesehen sein.

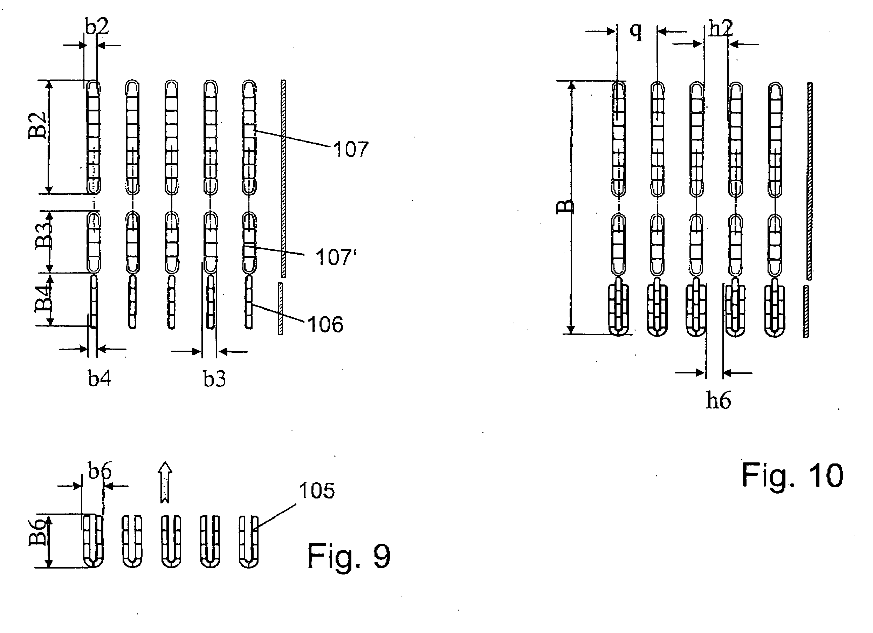

Bevorzugt hat der Wärmetauscher folgende Abmessungen (bezüglich der Maße wird auf die Figuren 9,10 und 14 verwiesen):

Die Gesamttiefe B des Wärmetauschers beträgt bevorzugt 10 bis 90 mm, insbesondere 30 bis 80 mm oder 10 bis 40, besonders bevorzugt 60 +/- 10 mm oder 20 +/-10 mm.

Die Breite B2 der Flachrohre der ersten Flachrohrreihe beträgt vorzugsweise etwa der Summe der Breiten B3 und B4 der Flachrohre der zweiten Flachrohrreihe und somit vorzugsweise maximal 0,5 x Gesamttiefe B des Wärmetauschers. Die Breite B2 kann jedoch gemäß einer alternativen Ausführungsform, bei der möglichst viele gleiche Bauteile verwendet werden, auch gleich der Breite B3 sein, so dass die gleichen Flachrohre für die erste Flachrohrreihe und den dickeren Bereich der zweiten Flachrohrreihe verwendet werden können.

Die Dicke b2 der Flachrohre der ersten Flachrohrreihe beträgt vorzugsweise 1,2 bis 3,5 mm, insbesondere 2,0 +/- 0,5 mm.

Die Dicke b3 der Flachrohre der zweiten Flachrohrreihe entspricht vorzugsweise der Dicke b2 der Flachrohre der ersten Flachrohrreihe, also vorzugsweise 1,2 bis 3,5 mm, insbesondere 2,0 +/- 0,5 mm.

Die Breite B4 der dünneren Flachrohre der zweiten Flachrohrreihe bzw. des dünneren Bereichs derselben entspricht vorzugsweise der Breite B3 der dickeren Flachrohre der zweiten Flachrohrreihe bzw. der Breite des dickeren Bereichs der zweiten Flachrohrreihe.

Die Dicke b4 der dünneren Flachrohre der zweiten Flachrohrreihe bzw. des dünneren Bereichs der zweiten Flachrohrreihe ist vorzugsweise kleiner als die Dicke b3 der dickeren Flachrohre der zweiten Flachrohrreihe bzw. des dickeren Bereichs der zweiten Flachrohrreihe. Sie beträgt vorzugsweise 0,8 bis 2,5 mm, insbesondere 1,2 bis 2,0 mm.

Die Breite B6 der einen Wärmeübergangsbereich bildenden Elemente beträgt vorzugsweise 5 bis 40 mm, wobei sie insbesondere bevorzugt etwa der Breite B4 entspricht, so dass die dünneren Flachrohre der zweiten Flachrohrreihe bzw. der dünnere Bereich derselben möglichst weit im Inneren der U-förmigen einen Wärmeübergangsbereich bildenden Elemente aufgenommen werden kann, wodurch sich eine große Wärmeübertragungsfläche ergibt, die eine schnelle Beladung und ebenso bei Bedarf eine gute Wärmeaufnahme ergibt.

Die Dicke b6 der einen Wärmeübergangsbereich bildenden Elemente entspricht vorzugsweise der Dicke b3, kann jedoch auch größer sei, so dass die einen Wärmeübergangsbereich bildenden Elemente und die dünneren Flachrohre der zweiten Flachrohrreihe bzw. deren dünnerer Bereich von ausreichend viel Kälteträgermedium und Kältemittel durchströmt werden. Die Abmessungen betragen vorzugsweise 2,5 bis 8,0 mm, insbesondere 3,5 bis 7,0 mm.

Der Abstand h2 der Flachrohre der ersten Flachrohrreihe beträgt vorzugsweise 4 bis 12 mm, insbesondere 8 +/- 2 mm.

Der Abstand h6 der einen Wärmeübergangsbereich bildenden Elemente beträgt vorzugsweise 3 bis 8 mm, insbesondere bevorzugt 4 bis 7 mm.

Die Querteilung q des Wärmetauschers beträgt vorzugsweise 5 bis 15 mm, insbesondere 10 +/- 3 mm.

Die Höhe H1 der Kälteträgermedium-Sammelbehälter beträgt bevorzugt 3 bis 25 mm, insbesondere 3 bis 15 mm, ist jedoch vorzugsweise so klein wie möglich, um Bauraum zu sparen und den von Luft durchströmbaren Querschnitt so groß wie möglich zu halten.

Eine derartige Klimaanlage wird vorzugsweise im Beladebetrieb des Kältespeichers derart betrieben, dass sowohl Kältemittel als auch Kälteträgermedium den Wärmetauscher durchströmen, wobei ein Wärmetausch zwischen den beiden Medien stattfindet. Hierbei wird bevorzugt die Ausblastemperatur des Wärmetauschers so lange auf 0 bis 3°C abgesenkt, bis die Temperatur des Kälteträgermediums zumindest im Kältespeicher auf 0 bis 4°C abgesenkt ist. Für die Überwachung ist bevorzugt mindestens ein Temperaturfühler vorgesehen, insbesondere bevorzugt im Kältespeicher.

Im Folgenden wird die Erfindung anhand zweier Ausführungsbeispiele von erfindungsgemäßen Klimaanlagen und mehrerer Ausführungsbeispiele von in diesen Systemen verwendeten Wärmetauschern mit Varianten, teilweise unter Bezugnahme auf die Zeichnung, im Einzelnen erläutert. Es zeigen:
- Fig. 1: eine schematische Ansicht einer Klimaanlage mit Kältespeicher gemäß dem ersten Ausführungsbeispiel,
- Fig. 2: eine schematische Ansicht einer Klimaanlage mit Kältespeicher gemäß dem zweiten Ausführungsbeispiel,

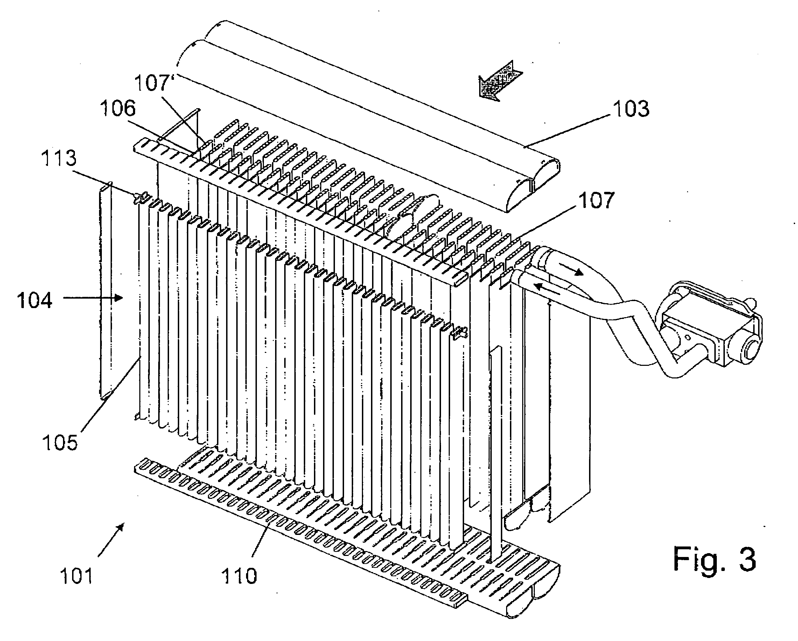

- Fig. 3: eine perspektivische Ansicht eines Wärmetauschers in Explosionsdarstellung mit Sammler und Expansionsventil gemäß dem ersten Ausführungsbeispiel eines Wärmetauschers, wie er bei einem erfindungsgemäßen System verwendet werden kann,

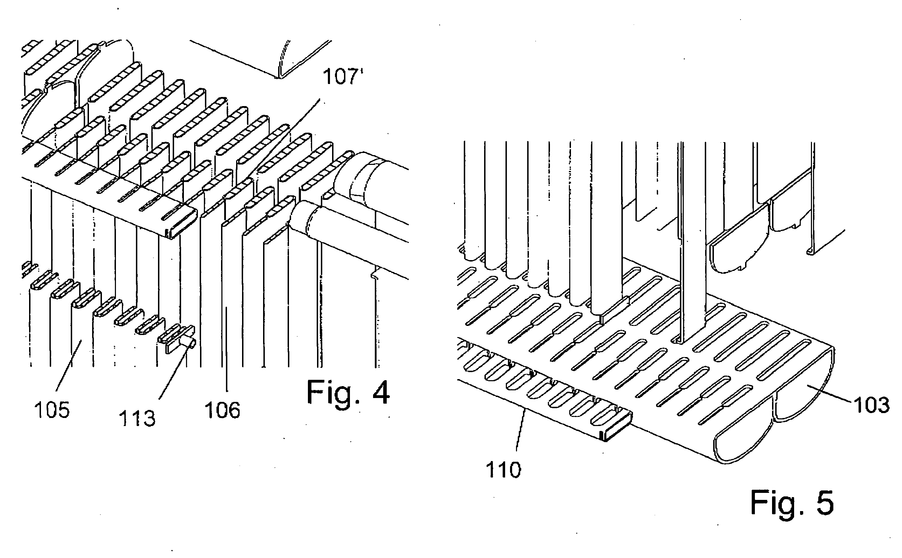

- Fig. 4: eine Detailansicht des oberen, rechten Bereichs von Fig. 3,
- Fig. 5: eine Detailansicht des unteren, rechten Bereichs von Fig. 3,

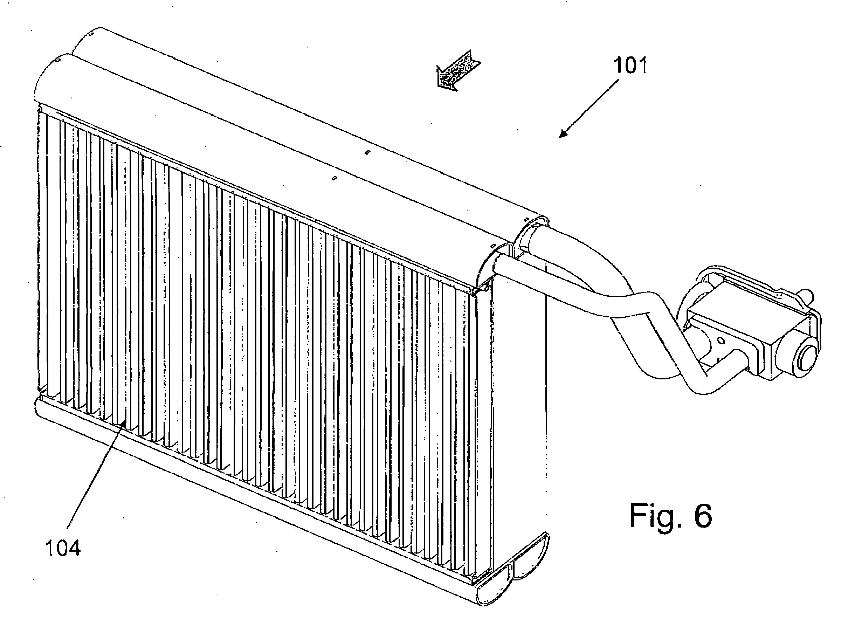

- Fig. 6: den Wärmetauscher von Fig. 3 in einer perspektivischen Ansicht,

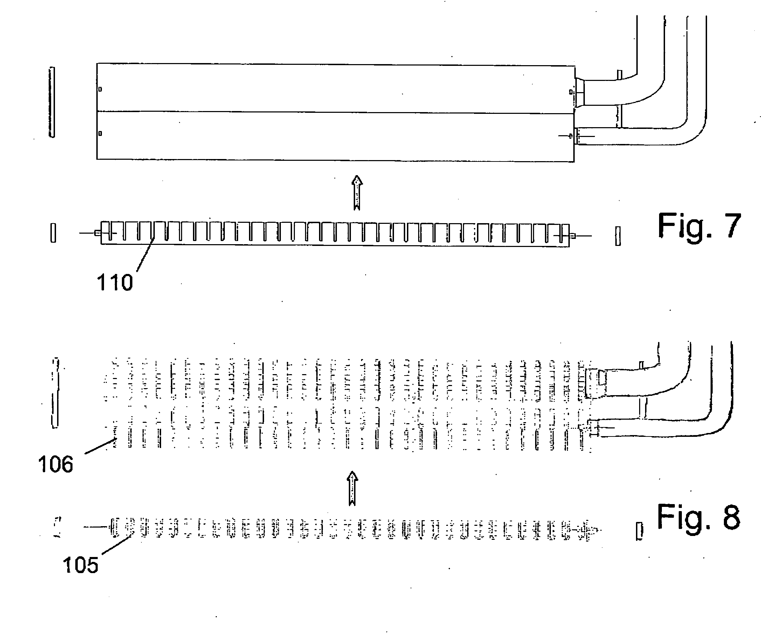

- Fig. 7: eine Draufsicht auf eine erste Variante des ersten Ausführungsbeispiels in Explosionsdarstellung zur Verdeutlichung des Zusammenbaus,
- Fig. 8: einen Fig. 7 entsprechenden Schnitt im Bereich der Flachrohre,
- Fig. 9: eine geschnittene von Fig. 8,
- Fig. 10: die Detailansicht von Fig. 9 in zusammengebautem Zustand,
- Fig. 11: eine Explosionsdarstellung des Wärmetauschers von Fig. 7 zur Verdeutlichung des weiteren Zusammenbaus,
- Fig. 12: einen Längsschnitt durch einen Wärmetauscher gemäß dem ersten Ausführungsbeispiel,
- Fig. 13: eine Detailansicht des linken, oberen Bereichs von Fig. 12 in nicht geschnittener Darstellung,
- Fig. 14: eine Detailansicht des rechten, oberen Bereichs von Fig. 12,
- Fig. 15: eine Detailansicht eines Schnittes quer durch den Wärmetauscher gemäß dem ersten Ausführungsbeispiel,

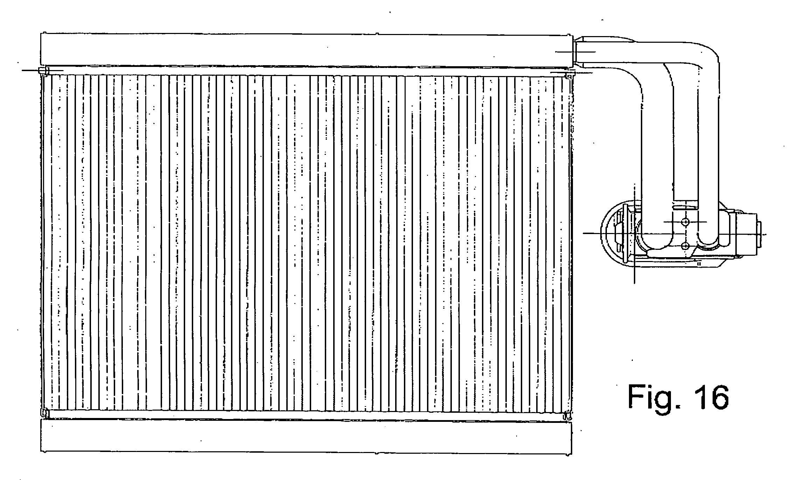

- Fig. 16: eine Seitenansicht des Wärmetauschers gemäß dem ersten Ausführungsbeispiel eines Wärmetauschers,
- Fig. 17: eine perspektivische Detailansicht eines Wärmetauschers gemäß einer zweiten Variante des ersten Ausführungsbeispiels eines Wärmetauschers ohne oberen Sammelkasten,
- Fig. 18: eine perspektivische Ansicht des Wärmetauschers gemäß der zweiten Variante des ersten Ausführungsbeispiels ohne oberen und unteren Sammelkasten mit Darstellung des Strömungsverlaufs des Kältemittels durch den Wärmetauscher,

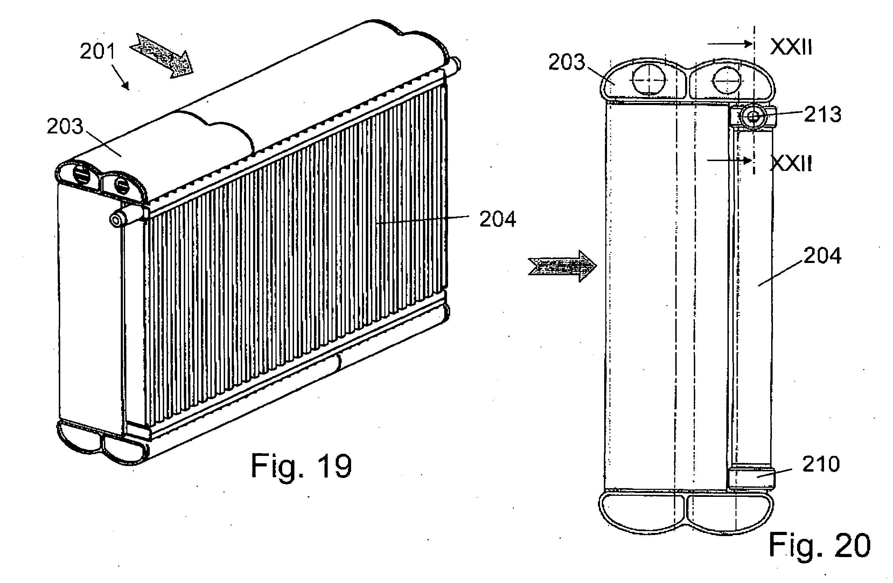

- Fig. 19: eine perspektivische Ansicht des Wärmetauschers gemäß dem zweiten Ausführungsbeispiel,
- Fig. 20: einen Schnitt quer durch den Wärmetauscher von Fig. 19,
- Fig. 21: eine Detailansicht des unteren Bereichs von Fig. 20,
- Fig. 22: einen Schnitt entlang Linie XXII-XXII von Fig. 20,
- Fig. 23: einen Schnitt in Längsrichtung des Wärmetauschers von Fig. 17 im oberen Bereich,
- Fig. 24: einen Schnitt durch einen Wärmetauscher gemäß einer fünften Variante des ersten Ausführungsbeispiels,
- Fig. 25: einen Schnitt durch einen Wärmetauscher gemäß einer sechsten Variante des ersten Ausführungsbeispiels,
- Fig. 26: einen Schnitt durch einen Wärmetauscher gemäß einer siebten Variante des ersten Ausführungsbeispiels,
- Fig. 27: einen Schnitt durch einen Wärmetauscher gemäß einer achten Variante des ersten Ausführungsbeispiels,
- Fig. 28: einen Schnitt in Längsrichtung durch einen Wärmetauscher gemäß einem dritten Ausführungsbeispiel,
- Fig. 29: eine Detailansicht eines Schnittes quer durch den Wärmetauscher gemäß dem dritten Ausführungsbeispiel und
- Fig. 30: eine perspektivische Ansicht eines Wärmetauschers gemäß dem dritten Ausführungsbeispiel.

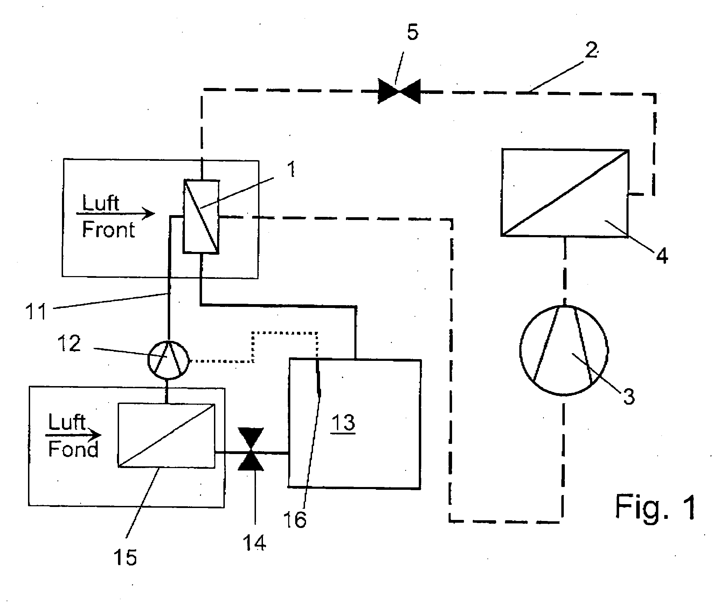

Eine Fahrzeug-Klimaanlage mit einem bei Bedarf mittels eines ersten Wärmetauschers 1 zu kühlenden Frontbereich und einem mittels eines zweiten Wärmetauschers zu kühlenden Fondbereich gemäß dem ersten Ausführungsbeispiel ist in Fig. 1 dargestellt. Die Klimaanlage weist einen Kältemittel-Kreislauf 2 mit einem Kompressor 3, einem Kondensator 4, einem Trockner (nicht dargestellt), einem Expansionsorgan 5 und besagten ersten Wärmetauscher 1 auf, wobei der Kältemittel-Kreislauf 2 in Fig. 1 mit gestrichelten Linien dargestellt ist. Der erste Wärmetauscher 1 wird, wie ein herkömmlicher Wärmetauscher im Front-Kühlbetrieb von zu kühlender Luft durchströmt. Der erste Wärmetauscher 1 gemäß dem ersten Ausführungsbeispiel unterscheidet sich jedoch durch seinen an späterer Stelle anhand verschiedener Ausführungsbeispiele mit Varianten im Detail erläuterten Aufbau von herkömmlichen Wärmetauschern.

Der von Kältemittel aus dem Kältemittel-Kreislauf 2 durchströmte erste Wärmetauscher 1 ist zudem Teil eines Kälteträgermedium-Kreislaufs 11, in Fig. 1 mit durchgezogenen Linien dargestellt, und wird auch von einem in demselben strömenden Kälteträgermedium, vorliegend Sole, durchströmt. Alternativ zu Sole kann beispielsweise auch ein mikrogekapseltes Latentmedium in einer Transportflüssigkeit oder ein Wasser-Glysanthin-Gemisch verwendet werden.

Der Kälteträgermedium-Kreislaufi 11 weist gemäß dem vorliegenden Ausführungsbeispiel neben dem ersten Wärmetauscher 1 eine vor demselben angeordnete Pumpe 12, einen nach dem Wärmetauscher 1 angeordneten, wärmeisolierten Kältespeicher 13, ein nach dem Kältespeicher 13 angeordnetes Absperrventil 14 und einen im Fondbereich des Fahrzeugs angeordneten, luftdurchströmbaren und als zweiten Wärmetauscher dienenden Kühlkörper 15 für die Klimatisierung des Fondbereichs des Fahrzeugs auf. In Fig. 1 ist ferner ein Temperaturfühler 16 angedeutet, welcher die Temperatur der Sole im Kältespeicher 13 ermittelt, in Abhängigkeit derer und der Kühlsituation (u.a. bestimmt durch gespeicherte Kälte, Kühlanforderung, Umgebungstemperatur, etc.) die Pumpe 12 geregelt wird. Der Temperaturfühler muss nicht notwendigerweise im Kältespeicher angeordnet sein, es ist auch eine andere Anordnung im Bereich des Kälteträgermedium-Kreislaufs möglich.

Die Funktion der in Fig. 1 dargestellten Klimaanlage ist Folgende:

Im Beladebetrieb des Kältespeichers 13 ist der Kältemittel-Kreislauf 2 derart geregelt, dass die Ausblastemperatur des ersten Wärmetauschers 1 auf die maximal zulässige Temperatur (von 0 bis 3°C) abgesenkt wird. Dabei wird das in Folge der Kompression erhitzte Kältemittel im Kondensator 4 abgekühlt. Es wird im Expansionsorgan 5 expandiert und so weiter abgekühlt, bevor es zum ersten Wärmetauscher 1 gelangt. Das von der Pumpe 12 umgewälzte Kälteträgermedium gibt Wärme an das Kältemittel des Kältemittel-Kreislaufs 2 und - sofern eine Luftdurchströmung des ersten Wärmetauschers 1 in diesem Betriebszustand vorgesehen ist - die kalte, den dem Kälteträgermedium zugeordneten Wärmeübertragungsbereich umströmende Luft ab, wobei der dem Kälteträgermedium zugeordnete Wärmeübertragungsbereich luftabströmseitig und der dem Kältemittel zugeordnete Wärmeübertragungsbereich luftanströmseitig angeordnet sind, so dass das Kälteträgermedium allmählich abgekühlt wird. Ob der erste Wärmetauscher 1 im Beladebetrieb des Kältespeichers 13 von Luft durchströmt wird oder nicht, hängt von den aktuellen Betriebsbedingungen ab, insbesondere dem Kühlbedarf des Frontbereichs. Der Beladebetrieb endet, sobald der Temperaturfühler 16 des Kältespeichers 13 ermittelt, dass das Kälteträgermedium, welches sich stets zum größten Teil im Kältespeicher 13 befindet, auf eine Temperatur abgekühlt wurde, die eine vorbestimmte untere Grenztemperatur, vorliegend auf unter 4°C, unterschreitet. In diesem Fall schaltet die Pumpe 12 automatisch ab. Der Beladebetrieb wird automatisch wieder gestartet, sobald die Temperatur des Kälteträgermediums im Kältespeicher 13 eine obere Grenztemperatur überschreitet, bei der im Bedarfsfall eine ausreichende Kühlung des Fondbereichs nicht mehr sichergestellt werden kann. Die untere Grenztemperatur liegt üblicherweise im Bereich von 0 bis 4°C. Die obere Grenztemperatur liegt üblicherweise im Bereich von 7 bis 12°C.

im Normalbetrieb, d.h. bei Betrieb des ersten Wärmetauschers 1, erfolgt der Kältemittelfluss wie zuvor beschrieben. Ist im Fondbereich keine Klimatisierung erforderlich, so steht die Pumpe 12. Ist eine Klimatisierung des Fondbereichs erforderlich, so fördert die Pumpe 12 entsprechend dem Kühlbedarf Kälteträgermedium aus dem Kältespeicher 13 zum luftdurchströmten Kühlkörper 15 des Fondbereichs. Die den Kühlkörper 15 durchströmende Luft wird derart vom Kälteträgermedium gekühlt dem Fondbereich zugeführt.

Gemäß einer nicht in der Zeichnung dargestellten Variante sind zwei parallel geschaltete Kühlkörper vorgesehen, einer für den Fondbereich rechts und einer für den Fondbereich links. Die Verteilung des Kälteträgermediums erfolgt hierbei ungeregelt, d.h. jeweils hälftig. Alternativ ist auch eine geregelte, bedarfsangepasste Verteilung des Kälteträgermediums auf die beiden Fondbereiche möglich, um den Komfort im Fondbereich zu verbessern.

Im Falle eines Motorstopps steht üblicherweise der Kältemittel-Kompressor 3, d.h. das Kälteträgermedium kann in diesem Betrieb nicht beladen werden. Um im Fondbereich für eine ausreichende Kühlung zu sorgen, wird kaltes Kälteträgermedium mit Hilfe der Pumpe 12 aus dem Kältespeicher 13 zum Kühlkörper 15 gefördert. Mangels Kühlung im ersten Wärmetauscher 1 gelangt das Kälteträgermedium ungekühlt zurück in den Kältespeicher 13, der sich somit langsam erwärmt.

Die Klimaanlage ist hierbei derart ausgelegt, dass der Kältemittel-Kreislauf auf den Frontbereich und der Kälteträgermedium-Kreislauf auf den Fondbereich ausgelegt ist.

Im Speicherkühlbetrieb kann gemäß einer nicht in der Zeichnung dargestellten Variante ein Bypass zum ersten Wärmetauscher vorgesehen sein, so dass hierin keine unnötige Erwärmung des Kälteträgermediums erfolgt.

Gemäß einer Variante der Klimaanlage, insbesondere im Falle eines Hybridfahrzeugs, kann das Kälteträgermedium auch für die Batteriekühlung oder die Kühlung anderer elektrischer Verbraucher herangezogen werden.

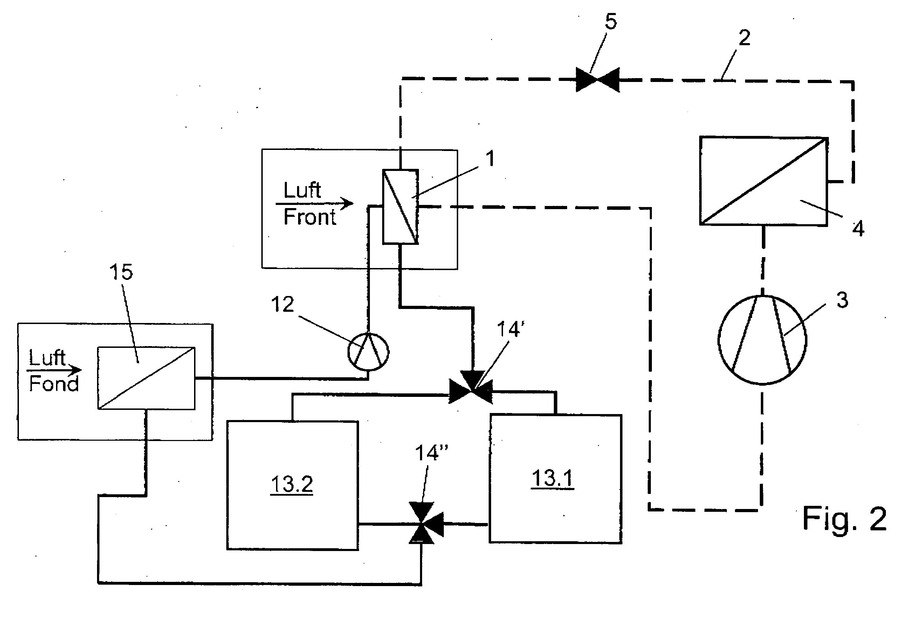

Bevor auf die mögliche Ausgestaltung des Wärmetauschers 1 im Detail eingegangen wird, wird im Folgenden unter Bezugnahme auf Fig. 2 ein zweites Ausführungsbeispiel einer Klimaanlage beschrieben, in welcher ein entsprechender Wärmetauscher 1 angeordnet ist.

Die Klimaanlage gemäß dem zweiten Ausführungsbeispiel, bei der gleiche und gleichwirkende Bauteile mit den gleichen Bezugszeichen wie beim ersten Ausführungsbeispiel versehen sind, weist im Wesentlichen die gleichen Elemente auf, jedoch sind an Stelle eines einzigen Kältespeichers 13 zwei Kältespeicher 13.1 und 13.2 vorgesehen. Für die Verteilung des Kälteträgermediums auf die beiden Kältespeicher 13.1 und 13.2 ist ein erstes (Umschalt-)Ventil 14' und für die Rückführung des Kälteträgermediums ein zweites (Umschalt-)Ventil 14" an Stelle des Absperrventils 14 vorgesehen.

Die Funktion der in Fig. 2 dargestellten Klimaanlage entspricht im Wesentlichen derjenigen der Klimaanlage des ersten Ausführungsbeispiels, wobei jedoch in Bezug auf das Vorhandensein von zwei Kältespeichem 13.1 und 13.2 eine verbesserte Beladung der Kältespeicher und insbesondere eine bessere Nutzung des kalten Kälteträgermediums möglich ist, da keine Rückführung des für die Kälteerzeugung im Bedarfsfall benutzten und daher erwärmten Kälteträgermediums in den einen Kältespeicher 13 erfolgen muss, sondern vielmehr - bei einer Abgabe des kalten- Kälteträgermediums aus dem ersten Kältespeicher 13.1 - der zweite Kältespeicher 13.2 mit dem rückgeführten Kältemittel befüllt werden kann, so dass das im ersten Kältespeicher 13.1 enthaltene Kälteträgermedium nicht mit warmem Kälteträgermedium gemischt wird und daher eine konstante Temperatur des zur Verfügung stehenden Kälteträgermediums gewährleistet werden kann. Ist das gesamte Kälteträgermedium des ersten Kältespeichers 13.1 verbraucht, so kann ggf. auch noch das bereits etwas erwärmte Kälteträgermedium des zweiten Kältespeichers 13.2 nochmals verwendet werden.

Gemäß einem weiteren Ausführungsbeispiel kann der Kühlkörper 15 des ersten (oder auch des zweiten) Ausführungsbeispiels entfallen, so dass ein entsprechender Aufbau des Kälteträgermedium-Kreislaufs auch für die Klimatisierung des Frontbereichs verwendet werden kann, wobei bei einem Motorstopp und stehendem Kompressor (und somit stehendem Kältemittel-Kreislauf) das Kälteträgermedium umgewälzt wird und dadurch in den ersten Wärmetauscher 1 gelangt, wo es zur Luftkühlung verwendet werden kann.

Im Folgenden werden beispielhaft drei Ausführungsbeispiele möglicher Wärmetauscher mit Varianten näher erläutert, die insbesondere für eine erfindungsgemäße Klimaanlage als erste Wärmetauscher geeignet sind. Die Wärmeübertragung zwischen Kältemittel und Kälteträgermedium muss jedoch nicht in einem derartigen Wärmetauscher erfolgen, worauf an späterer Stelle näher eingegangen wird.

Gemäß dem ersten Ausführungsbeispiel eines Wärmetauschers 1, wie er in einer erfindungsgemäßen Klimaanlage, insbesondere in einer der zuvor beschriebenen Klimaanlagen verwendet wird, ist ein zweireihiger Verdampfer 101 vorgesehen. Der vom Kälteträgermedium durchströmten, im luftdurchströmbaren Bereich angeordnete Bereich des Wärmetauschers 1, im Folgenden als Kälteträgerbereich 104 bezeichnet, ist hierbei direkt in den Verdampfer 101 integriert.

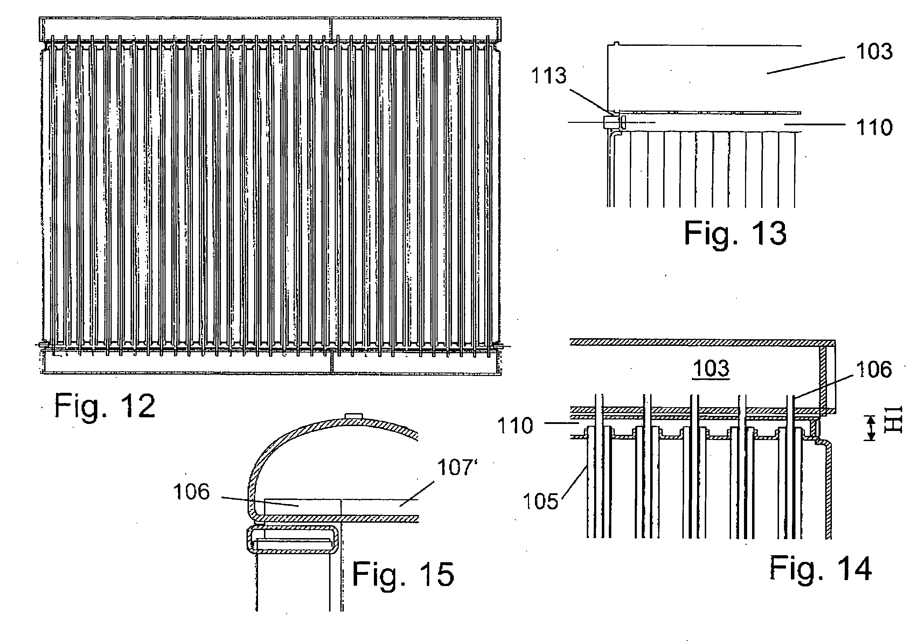

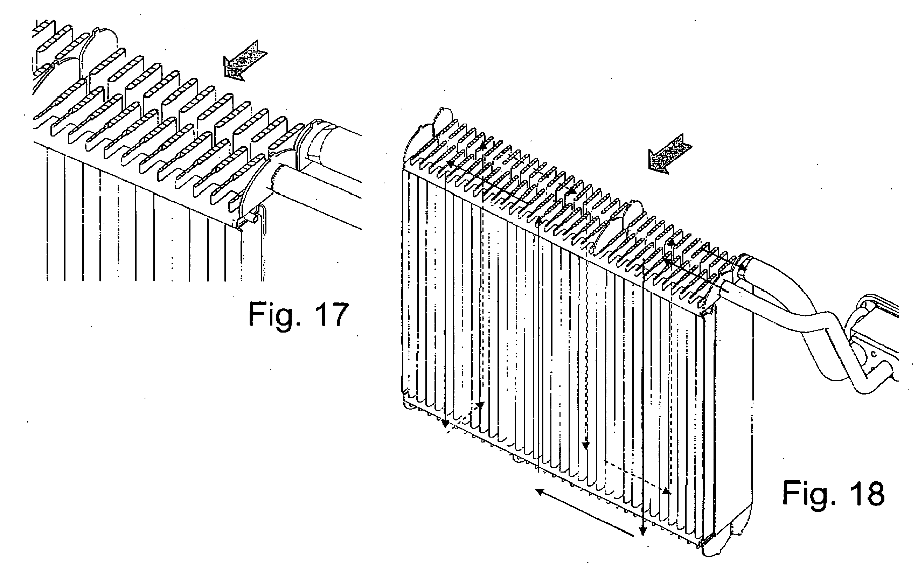

Die erste Flachrohrreihe wird durch eine Reihe herkömmlicher, mehrkammriger, extrudierter Flachrohre 107 gebildet, die mit ihren Enden jeweils in einen Sammler 103 münden (vgl. bspw. Fig. 14). Der Aufbau der ersten Reihe entspricht hierbei dem herkömmlicher Wärmetauscher. Vorliegend sind in den Sammlern 103 Trennwände 112 zur Vorgabe eines Strömungswegs des Kältemittels (vorliegend R134a, jedoch kann bspw. auch CO₂ verwendet werden) durch den Wärmetauscher 101 vorgesehen, so dass der Wärmetauscher 101 im Kreuzgegenstrombetrieb mit jeweils zwei Umlenkungen in der Breite durchströmt wird (vgl. Fig. 18, wobei die Strömungsrichtung des Kältemittels in einem Wärmetauscher 101 gemäß einer an späteren Stelle näher beschriebenen zweiten Variante des zweiten Ausführungsbeispiels und die Strömungsrichtung der Luft durch Pfeile dargestellt ist). Es sind jedoch auch andere Durchströmungen möglich, wobei jedoch vorzugsweise zuerst die Seite des Wärmetauschers 101 durchströmt wird, in welcher der Kälteträgerbereich 104 angeordnet ist. Ebenfalls können auch Wärmetauscher mit mehr als zwei Reihen vorgesehen sein, wobei hierbei der Kälteträgerbereich 104 vorzugsweise außen an der luftabströmseitig angeordneten Reihe angeordnet ist, die vorzugsweise zuerst vom Kältemittel durchströmt wird.

Die zweite Flachrohrreihe wird vorliegend durch jeweils zwei direkt nebeneinander angeordnete Flachrohre 107' und 106 gebildet, wobei die Flachrohre 107' luftanströmseitig angeordnet sind und eine den Flachrohren 107 der ersten Flachrohrreihe entsprechende Dicke aufweisen, jedoch im Querschnitt nur etwa halb so lang sind. Die luftabströmseitig angeordneten die Flachrohre 106 sind vorliegend nahezu ebenso lang wie die Flachrohre 107' aber deutlich dünner ausgebildet und werden auf drei Seiten von in ihrem Querschnitt U-förmig ausgebildeten Rohren (U-Rohre, vorliegend mit mehreren Kanälen) umgeben, wobei es sich um die einen Wärmeübergangsbereich bildenden Elemente 105 handelt, die in Verbindung mit oberen und unteren Kälteträgermedium-Sammelbehältern 110 den Kälteträgerbereich 104 bilden. Die Innenabmessungen der einen Wärmeübergangsbereich bildenden Elemente 105 entsprechen hierbei den Außenabmessungen der Flachrohre 106, so dass sie dicht aneinander anliegen.

Die einen Wärmeübergangsbereich bildenden Elemente 105 sind etwas kürzer als die Flachrohre 106, 107 und 107' ausgebildet, so dass die Flachrohre 106, 107 und 107' über dieselben hinaus- und in die Sammler 103 hineinragen, während die in ihrem Querschnitt als U-förmige Rohre ausgebildeten einen Wärmeübergangsbereich bildenden Elemente 105 nur bis in die Befüllkästen ragen, im Folgenden als Kälteträgermedium-Sammelbehälter 110 bezeichnet, die unter- bzw. oberhalb der Sammler 103 luftabströmseitig im Wärmetauscher 101 angeordnet sind. Für den Anschluss des Kälteträgerbereichs 104 an einen Kälteträgermedium-Kreislauf, in dem das Kälteträgermedium, vorliegend Sole, strömt, sind vorliegend auf einander gegenüberliegenden Seiten der Kälteträgermedium-Sammelbehälter 110 Stutzen 113 angeordnet. Im oberen Kälteträgermedium-Sammelbehälter 110 ist ferner mittig eine Trennwand vorgesehen, so dass das Kälteträgermedium auf einer Seite durch die einen Wärmeübergangsbereich bildenden Elemente 105 nach unten und auf der anderen Seite nach oben strömt, d.h. einmal umgelenkt wird. Beliebige andere Strömungsverläufe sind möglich. Der Kälteträgerbereich wird vorliegend in entgegengesetzter Richtung direkt zum benachbarten Kältemittelstrom durchströmt, also bei Bezugnahme auf Fig. 18 von links nach rechts, während der Kältemittelstrom im entsprechenden Bereich von rechts nach links verläuft. Prinzipiell ist durchaus auch eine zweireihige Anordnung der einen Wärmeübergangsbereich bildenden Elemente 105 möglich, so dass auch eine Umlenkung in der Tiefe erfolgen kann.

Für die Herstellung des Wärmetauschers 101 werden vorliegend alle Komponenten zusammengesetzt und auf bekannte Weise miteinander verlötet.

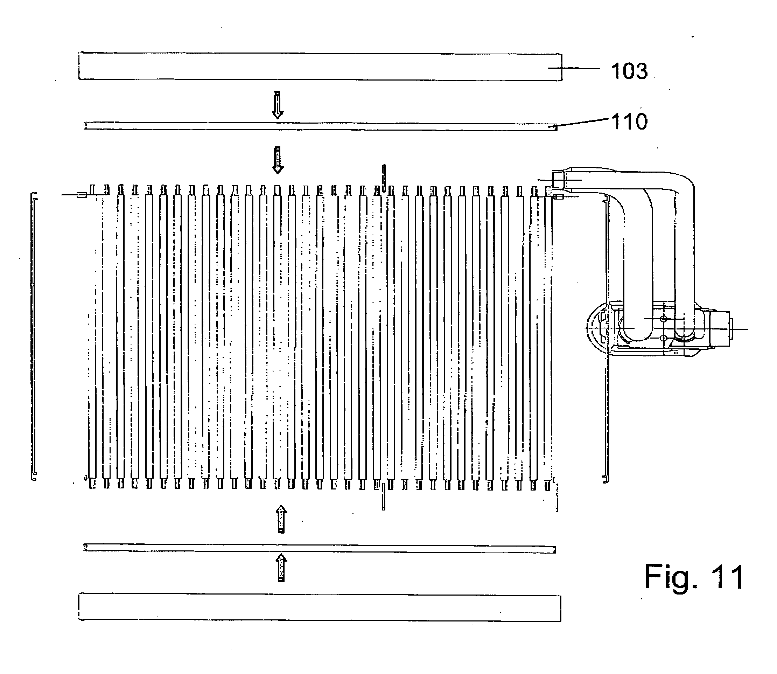

Gemäß einer ersten Variante der Herstellung (vgl. Figuren 10 und 11) erfolgt eine getrennte Vormontage von Wärmetauscher (ohne Kälteträgerbereich) und Kälteträgerbereich. Die beiden Baugruppen werden nach der Vormontage ineinander geschoben, wie in der Zeichnung dargestellt, und anschließend miteinander verlötet. Die beiden Baugruppen können alternativ auch getrennt verlötet und anschließend ineinander geschoben werden. Ebenfalls sind auch mechanisch gefügte Wärmetauscher möglich.

Bei den Flachrohren 106, 107, 107' sowie den Rohren, welche die einen Wärmeübergangsbereich bildenden Elemente 105 bildenden, handelt es sich gemäß dem vorliegenden Ausführungsbeispiel um extrudierte Rohre.

Neben extrudierten Flachrohren sind insbesondere auch geschweißte oder aus Scheiben gefalzte Flachrohre möglich.

Gemäß dem vorliegenden Ausführungsbeispiel hat der Wärmetauscher 101 folgende Abmessungen (bezüglich der Maße wird auf die Figuren 9, 10 und 14 verwiesen):
Gesamttiefe B des Wärmetauschers 101: 65 mm
Breite B2 der Flachrohre 107 der ersten Flachrohrreihe: 30 mm
Dicke b2 der Flachrohre 107 der ersten Flachrohrreihe: 3 mm
Breite B3 der Flachrohre 107' der zweiten Flachrohrreihe: 15 mm
Dicke b3 der Flachrohre 107' der zweiten Flachrohrreihe: 3 mm
Breite B4 der Flachrohre 106 der zweiten Flachrohrreihe: 14 mm
Dicke b4 der Flachrohre 106 der zweiten Flachrohrreihe: 1,5 mm
Breite B6 der Elemente 105: 14 mm
Dicke b6 der Elemente 105: 5 mm
Abstand h2 der Flachrohre 107 der ersten Flachrohrreihe: 6 mm
Abstand h6 der Elemente 105: 4 mm
Querteilung q des Wärmetauschers 101: 10 mm
Höhe H1 der Kälteträgermedium-Sammelbehälter 110: 4 mm

Gemäß einer zweiten Variante des Ausführungsbeispiels sind an Stelle getrennt ausgebildeter Flachrohre 106 und 107' einstückig ausgebildete, vorliegend wiederum extrudierte Flachrohre mit unterschiedlichen Dicken vorgesehen. Hierbei wird - entsprechend der ersten Variante des zweiten Ausführungsbeispiels - der Kälteträgerbereich seitlich auf den dünneren Bereich der Flachrohre aufgeschoben, wobei das Verlöten vor oder nach dem Aufschieben erfolgen kann. Vorliegend weisen die dickeren Bereiche der zweiten Flachrohrreihe eine Breite auf, welche der Breite der Flachrohre der ersten Flachrohrreihe entspricht. Der dünnere Bereich ist vorliegend etwas schmäler als der dickere Bereich ausgebildet.

Gemäß einer weiteren, nicht in der Zeichnung dargestellten dritten Variante des Ausführungsbeispiels sind an Stelle der die Sammler bildenden Sammelkästen mit jeweils U-förmigem Querschnitt aus Platten gebildete Sammler vorgesehen.

Entsprechend einer vierten Variante des Ausführungsbeispiels sind die Flachrohre des Wärmetauschers wie auch die einen Wärmeübergangsbereich bildenden Elemente in ihrer Längsrichtung U-förmig gebogen, so dass die unteren Sammelbehälter entfallen. Die oberen Sammelkästen weisen jeweils eine Mehrzahl von Trennwänden auf, um ein Durchströmen der Flachrohre des Wärmetauschers und der einen Wärmeübergangsbereich bildenden Elemente sicherzustellen.

Gemäß dem zweiten Ausführungsbeispiel eines Wärmetauschers, wie er in einer erfindungsgemäßen Klimaanlage verwendet werden kann, bei dem gleiche oder gleichwirkende Bauteile mit um 100 höheren Bezugszeichen bezüglich des ersten Ausführungsbeispiels versehen sind, ist ein vom Auf bau bezogen auf die Sammler 203 zweireihiger Verdampfer 201 vorgesehen, bei dem ein Kälteträgerbereich 204 in den Verdampfer 201 baulich integriert ist.

Die zweite Flachrohrreihe wird durch Flachrohre 207', welche in ihrer Dicke den Flachrohren 207 der ersten, luftanströmseitig hiervon angeordneten Flachrohrreihe entsprechen, ihre Breite ist jedoch um ca. 50% verringert, so dass vorliegend nur vier anstelle von acht Kammern bei den entsprechenden Mehrkammer-Flachrohren vorgesehen sind.

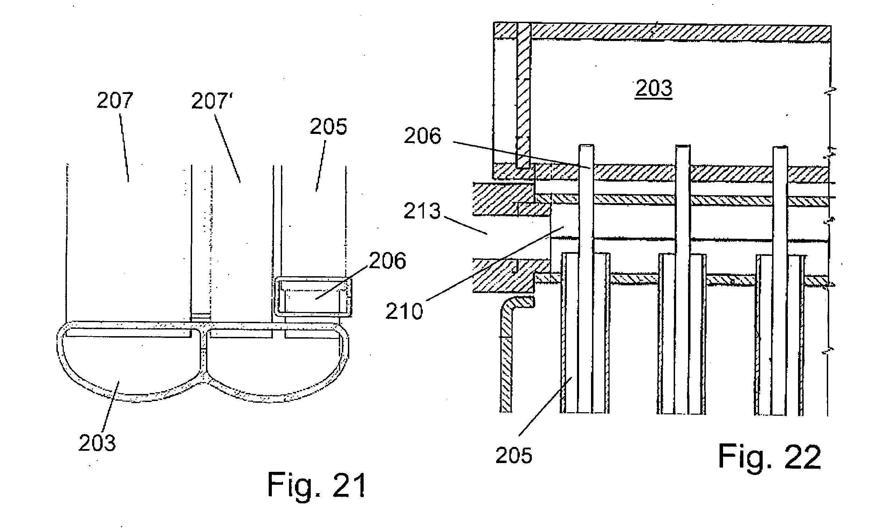

In luftströmungsrichtung gesehen hinter den Flachrohren 207' ist der Kälteträgerbereich 204 mit einer weiteren Reihe von Flachrohren 206 angeordnet, die in die gleichen Sammler 203 münden, wie die benachbarten Flachrohre 207'. Die Flachrohre 206 sind dünner und schmäler ausgebildet als die Flachrohre 207'. Außenseitig sind sie im Wärmeübergangsbereich von einem einen Wärmeübergangsbereich bildenden Element 205 auf allen Seiten umgeben, wobei das einen Wärmeübergangsbereich bildende Element 205 ebenfalls als Flachrohr ausgebildet ist, jedoch mit einer etwas größeren Dicke und einer etwas geringeren Breite als die benachbarten Flachrohre 207'. Die Flachrohre, welche die einen Wärmeübergangsbereich bildenden Elemente 205 bildenden, enden in unterhalb bzw. oberhalb der Sammler 203 angeordneten Kälteträgermedium-Sammelbehältern 210, durch welche die Flachrohre 206 hindurchragen und in den Sammlern 203 enden (vgl. Fig. 22).

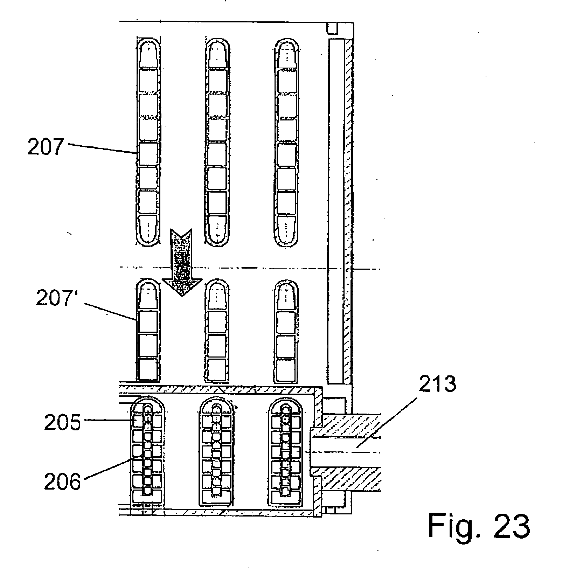

Gemäß der Darstellung von Fig. 23 sind die Flachrohre 206 und die Element 205 bildenden Flachrohre getrennt ausgebildet, wobei die Flachrohre 206 in die Flachrohre eingeschoben sind und mittels Rippen, die senkrecht zur Luftströmungsrichtung verlaufen, zentriert werden. Gemäß einer Variante kann die entsprechende Anordnung auch durch doppelwandige Rohre gebildet werden, so dass die Flachrohre 206 und die das Element 205 bildenden Flachrohre einstückig miteinander ausgebildet sind. Die einstückige Ausgestaltung bietet Vorteile bei der Montage, jedoch ist das Ablängen der Flachrohre deutlich aufwändiger.

Vorliegend enden die Flachrohre 207', 206 und die das Element 205 bildenden Flachrohre in Luftströmungsrichtung gesehen abgeflacht, während sie luftanströmseitig abgerundet ausgebildet sind. Dabei können die Enden der Flachrohre auch anders ausgestaltet sein, insbesondere können beide Enden abgerundet sein.

Für die Herstellung des Verdampfers 201 wird der Bereich, in welchem das Kälteträgermedium strömt, samt Kälteträgermedium-Sammelbehälter 210 vormontiert und als Baugruppe in den Verdampfer 201 im selben Arbeitsschritt wie die Flachrohre 207 und 207' eingebaut. Anschließend erfolgt in einem einzigen Arbeitsschritt das Verlöten des gesamten Verdampfers 201. Prinzipiell kann auch die zuvor genannte Baugruppe bereits vorverlötet werden, dies verteuert jedoch die Herstellung und ist daher nur in Sonderfällen sinnvoll, insbesondere wenn keine sichere Vorfixierung der einzelnen Bauteile der Baugruppe möglich ist, so dass die Dichtheit des Kälteträgerbereich 204 nicht gewährleistet werden kann.

Der Anschluss des Kälteträgerbereich 204 erfolgt nach dem Verlöten auf bekannte Weise, so dass über den einen an dem oberen Kälteträgermedium-Sammelbehälter 210 seitlich vorgesehenen Stutzen 213 Kälteträgermedium in den Wärmetauscher und über den anderen auf der anderen Seite vorgesehenen Stutzen 213 wieder aus diesem heraus gelangt, wobei es durch eine Trennwand, die im oberen Kälteträgermedium-Sammelbehälter 210 angeordnet ist, umgelenkt wird.

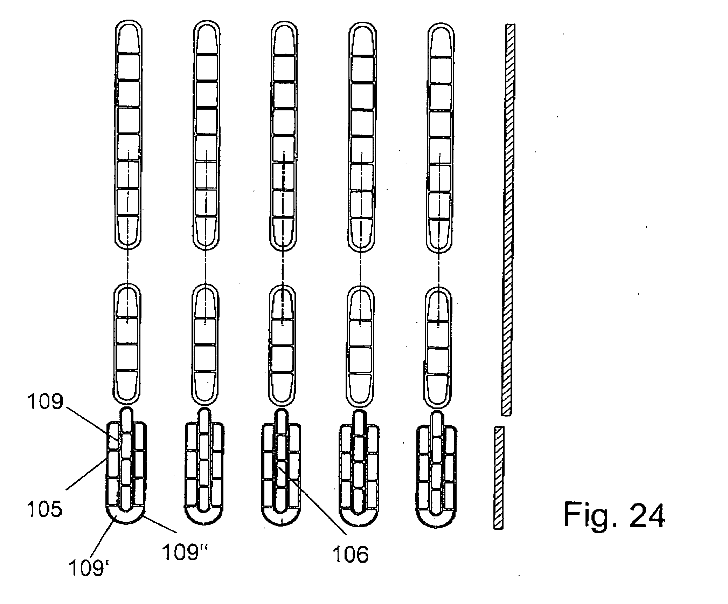

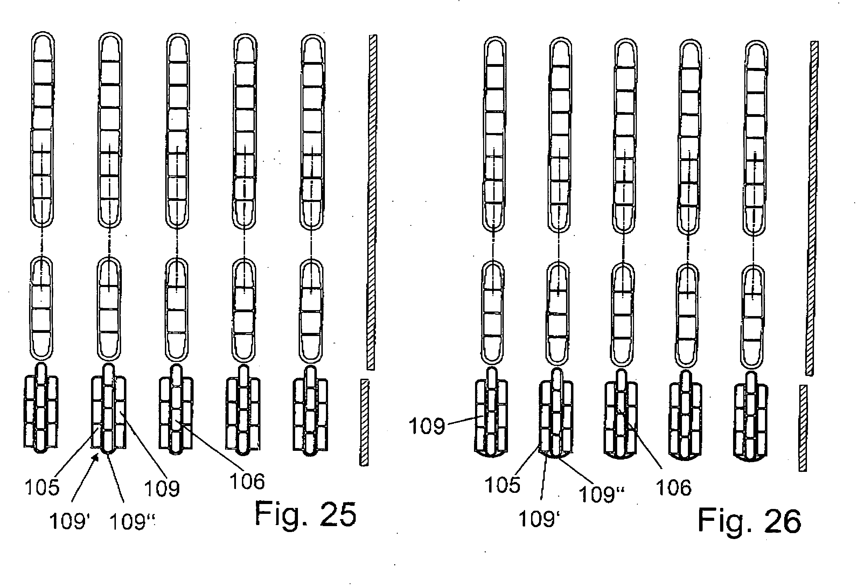

Im Folgenden erfolgt unter Bezugnahme auf die Figuren 24 bis 27 die Beschreibung der fünften bis neunten Variante des weiter oben beschriebenen, ersten Ausführungsbeispiels eines Wärmetauschers 101, wie er bei einer erfindungsgemäßen Klimaanlage verwendet werden kann. Der Aufbau des Wärmetauschers entspricht hierbei dem Wärmetauscher des zweiten Ausführungsbeispiels, jedoch unterscheiden sich jeweils die einen Wärmeübergangsbereich bildenden Elemente 105, die hierin integriert sind.

Gemäß der fünften Variante des ersten Ausführungsbeispiels ist das einen Wärmeübergangsbereich bildende Element 105 derart ausgebildet, dass der mittlere Kälteträgermedium-Kanal 109' auf einer Seite, die später auf der Seite des Flachrohres 106 liegend angeordnet ist, geöffnet ist. Dabei ist das das Element 105 bildende Flachrohr um den Bereich des geöffneten, mittleren Kanals 109' U-förmig gebogen, wobei die geschlossenen Kanäle 109 die Schenkel bilden, die voneinander beabstandet sind und zwischen sich das Flachrohr 106 aufnehmen. Das Element 105 weist somit mehrere, vorliegend zwei mal drei Kanäle 109 auf, die an den Seitenflächen des Flachrohres 106 anliegen, während der geöffnete, mittlere Kanal 109' einen Verbindungssteg 109" zwischen den beiden Hälften des Elements 105 bildet.

Gemäß der sechsten Variante des ersten Ausführungsbeispiels ist das einen Wärmeübergangsbereich bildende Element 105 derart ausgebildet, dass - bei wiederum geöffnetem mittleren Kälteträgermedium-Kanal 109' - der Verbindungssteg 109" an das Flachrohr 106 anliegend ausgebildet ist.

Bei der siebten Variante des ersten Ausführungsbeispiels sind die Wände des mittleren Kälteträgermedium-Kanals 109' etwa mittig zusammengepresst und somit frei von Kälteträgermedium. Sie bilden gemeinsam einen Verbindungssteg 109" zwischen den beiden mit Kälteträgermedium befüllten Hälften des einen Wärmeübergangsbereich bildenden Elements 105.

Gemäß der achten Variante des ersten Ausführungsbeispiels entfällt der Verbindungssteg vollständig zwischen den beiden Hälften des einen Wärmeübergangsbereich bildenden Elements über zumindest einen wesentlichen Bereich der Länge des Flachrohres 106. Das einen Wärmeübergangsbereich bildende Element 105 hierbei liegt jeweils flächig auf einander gegenüberliegenden Seitenflächen des Flachrohres 106 an.

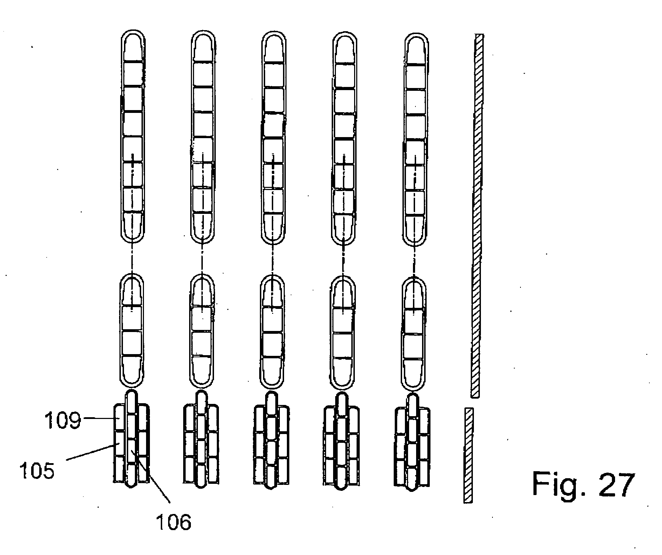

Gemäß einer neunten Variante des ersten Ausführungsbeispiels, welche in ihrer Darstellung der Fig. 27 entspricht, entfallen die Verbindungsstege 109" vollständig, d.h. das einen Wärmeübergangsbereich bildende Element 105 ist zweiteilig ausgebildet, wobei die beiden getrennt ausgebildeten Hälften jeweils flächig auf einander gegenüberliegenden Seitenflächen des Flachrohres 106 anliegen.

Beim in der erfindungsgemäßen Klimaanlage verwendeten Wärmetauscher handelt es sich vorzugsweise um einen Wärmetauscher mit einer Mehrzahl nebeneinander liegend angeordneter, das Kältemittel führender Rohre und mit wenigstens einem Kälteträgerbereich, in welchem das Kälteträgermedium vorgesehen ist, wobei mindestens ein einen Wärmeübergangsbereich bildendes Element, welches Teil des Kälteträgerbereich ist, an einem das Kältemittel führenden Rohr an mindestens zwei Seiten anliegt, insbesondere aber das das Kältemittel führende Rohr auf mindestens drei Seiten zumindest in Teilbereichen umgibt. Dabei kann das das Kältemittel führende Rohr auch vollständig innerhalb des einen Wärmeübergangsbereich bildenden Elements angeordnet sein.

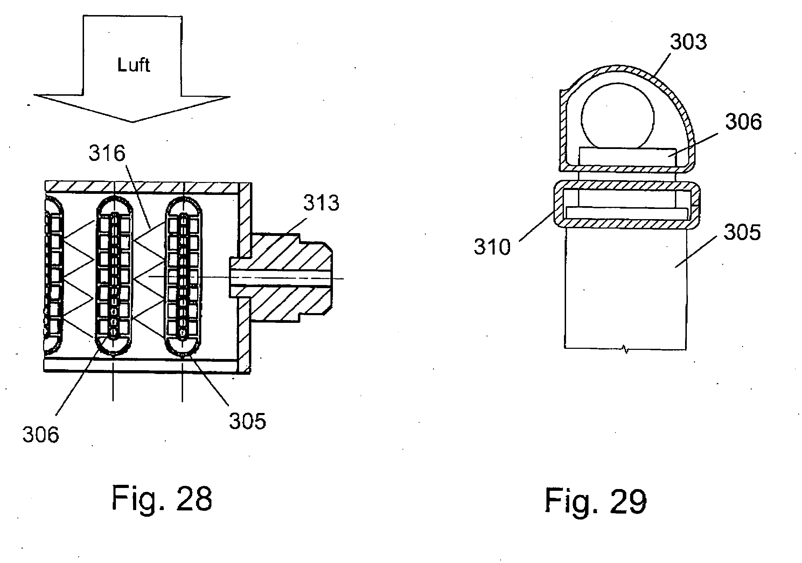

Gemäß dem dritten Ausführungsbeispiel eines Wärmetauschers 301, wie er in einer der Erfindung folgenden Klimaanlage verwendet wird, ist ein einreihiger Verdampfer vorgesehen. Bei der in Fig. 28 dargestellten Anordnung des das Kältemittel führenden Flachrohres 306 im einen Wärmeübergangsbereich bildenden Element 305 ist das Rohr 306 in das das Kälteträgermedium führende, einen Wärmeübergangsbereich bildende Element 305 integriert, bzw. in diesem ausgebildet. Das einen Wärmeübergangsbereich bildende Element 305 ist in Form eines Flachrohres ausgeführt. In einer Variante kann das Kältemittel führende Rohr 306 auch in das Flachrohr 305 gesteckt sein. Das Kälteträgermedium bzw. die Sole umgibt das kältemittelführende Rohr 306 von allen Seiten, vorliegend in Form einer Rohr-in-Rohr-Anordnung. Zwischen den einen Wärmeübergangsbereich bildenden Elementen 305 sind für einen effektiveren Wärmeübergang auf die durchströmende bzw. zu kühlende Luft Rippen 316, insbesondere Wellrippen vorgesehen.

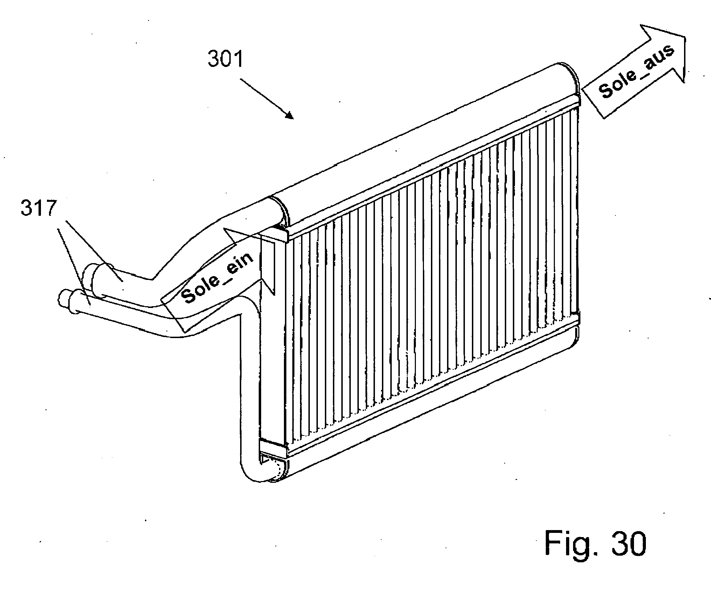

Fig. 29 zeugt zum dritten Ausführungsbesipiel, dass die einen Wärmeübergangsbereich bildenden Elemente 305 sind etwas kürzer als die Flachrohre 306 ausgebildet, so dass die Flachrohre 306 über dieselben hinaus- und in die Sammler 303 hineinragen, während die als Flachrohre ausgebildeten einen Wärmeübergangsbereich bildenden Elemente 305 nur bis in den Kälteträgermedium-Sammelbehälter 310, die unter- bzw. oberhalb der Sammler 303 im Wärmetauscher 301 angeordnet sind. Für den Anschluss des Kälteträgerbereichs an einen Kälteträgermedium-Kreisfauf, in dem das Kälteträgermedium, vorliegend Sole, strömt, sind vorliegend auf einander gegenüberliegenden Seiten der Kälteträgermedium-Sammelbehälter 310 Stutzen 313 angeordnet. Der Kälteträgerbereich wird vorliegend in gleicher Richtung direkt zum benachbarten Kältemittelstrom durchströmt, also bei Bezugnahme auf Fig. 30 von links nach rechts, während der Kältemittelstrom im entsprechenden Bereich ebenfalls von rechts nach links verläuft. Ein entgegensetztes Strömen von Kälteträger und Kältemittel ist ebenfalls denkbar. Die Stutzen 317 am Wärmetauscher 301 dienen der Zu- und Abfuhr des Kältemittels.

Durch die Rohr-in-Rohr Anordnung lässt sich die Bautiefe B gering halten, da sie im Wesentlichen durch die Tiefe der einen Wärmeübergangsbereich bildenden Elemente 305 bestimmt ist. Bevorzugt liegt die Gesamtbautiefe B bei 10 bis 40 mm, vorliegend bei etwa 20 mm.

Der Wärmetauscher 1 muss jedoch nicht entsprechend den zuvor beschriebenen Ausführungsbeispielen ausgebildet sein. Es ist ebenfalls eine direkte Wärmeübertragung in einem Kältemittel-Kälteträgermedium - Wärmetauscher ohne Luftdurchströmung (z.B. in einem Plattenwärmetauscher oder einem Koaxialrohr) möglich. Im Kältemittel-Kreislauf ist in diesem Fall ein herkömmlicher Verdampfer angeordnet. Die Durchströmung kann bei einer direkten Wärmeübertragung Kältemittel-Kälteträgermedium, wie auch im Falle der in der Zeichnung dargestellten Verdampfer, wo ggf. auch ein Luftstrom durch den Wärmetauscher vorhanden ist, sowohl im Gleichstromals auch im Gegenstrombetrieb erfolgen. Die Wärmetauscher können sich durchaus auch in Bezug auf die Anzahl der Blöcke in Breite und/oder Tiefe unterscheiden. Ferner kann für die Kühlung des Kälteträgermediums auch ein separater Wärmetauscher vorgesehen sein, der unabhängig vom Kältemittel-Wärmetauscher ist.

## Patentansprüche

1. Klimaanlage mit einem Kältemittel-Kreislauf (2), in welchem mindestens ein Kompressor (3) und mindestens ein Wärmetauscher (1) angeordnet sind und in welchem ein Kältemittel strömt, sowie einem Kälteträgermedium-Kreislauf (11), in welchem mindestens eine Pumpe (12), mindestens ein Wärmetauscher (1) und mindestens ein Kältespeicher (13) angeordnet sind und in welchem ein Kälteträgermedium strömt, **dadurch gekennzeichnet, dass** ein Wärmetauscher (1) vorgesehen ist, in welchem ein Wärmetausch zwischen dem Kälteträgermedium und dem Kältemittel stattfindet.

2. Klimaanlage nach Anspruch 1, **dadurch gekennzeichnet, dass** im Kälteträgermedium-Kreislauf (11) mindestens ein Kühlkörper (15) vorgesehen ist, welcher von Luft durchströmbar ist, zu deren Kühlung er dient.

3. Klimaanlage nach Anspruch 1 oder 2, **dadurch gekennzeichnet, dass** der Kältemittel-Kreislauf (2) einer ersten Klimazone und der Kälteträgermedium-Kreislauf (11) einer zweiten Klimazone zugeordnet ist.

4. Klimaanlage nach Anspruch 1 oder 2, **dadurch gekennzeichnet, dass** der Kältemittel-Kreislauf (2) einer ersten Klimazone und der Kälteträgermedium-Kreislauf (11) einer Batterie oder einem anderen, wärmeerzeugenden, elektrischen Verbraucher zugeordnet ist.

5. Klimaanlage nach einem der vorhergehenden Ansprüche, **dadurch gekennzeichnet, dass** der Wärmetauscher (1) des Kältemittel-Kreislaufs (2) und der Wärmetauscher (1) des Kälteträgermedium-Kreislaufs (11) integriert als ein Wärmetauscher (1) ausgebildet sind.

6. Klimaanlage nach Anspruch 5, **dadurch gekennzeichnet, dass** der Wärmetauscher (1) zumindest bereichsweise sowohl vom Kältemittel als auch vom Kälteträgermedium durchströmt wird, wobei die Strömungskanäle, in denen das Kältemittel und Kälteträgermedium strömen, zumindest bereichsweise durch eine gemeinsame Wand oder zwei flächig aneinanderliegende Wände getrennt sind.

7. Klimaanlage nach Anspruch 5 oder 6, **dadurch gekennzeichnet, dass** der Wärmetauscher (1) von Luft durchströmbar ist.

8. Klimaanlage nach einem der vorhergehenden Ansprüche, **dadurch gekennzeichnet, dass** das Kälteträgermedium durch Sole gebildet ist.

9. Verfahren zum Betreiben einer Klimaanlage nach einem der Ansprüche 1 bis 8, **dadurch gekennzeichnet, dass** im Beladebetrieb des Kältespeichers (13; 13.1, 13.2) sowohl Kältemittel als auch Kälteträgermedium den Wärmetauscher (1) durchströmen, wobei ein Wärmetausch zwischen den beiden Medien stattfindet.

10. Verfahren nach Anspruch 9, **dadurch gekennzeichnet, dass** im Beladebetrieb des Kältespeichers (13; 13.1, 13.2) die Ausblastemperatur des Wärmetauschers (1) auf 0 bis 3°C abgesenkt wird, bis die Temperatur des Kälteträgermediums zumindest im Kältespeicher (13; 13.1, 13.2) auf 0 bis 4°C abgesenkt ist.
